# EUROPÄISCHE PATENTSCHRIFT

(11) **EP 1 467 936 B1**
(45) Veröffentlichungstag und Bekanntmachung des Hinweises auf die Patenterteilung: **15.02.2006**
(21) Anmeldenummer: 03729398.2
(22) Anmeldetag: 20.01.2003
(51) Int. Cl.: B65G 53/52, B65G 53/58

(54) **SYSTEM ZUR BEEINFLUSSUNG DER RHEOLOGISCHEN EIGENSCHAFTEN EINES FÖRDERBAREN MATERIALS**
SYSTEM FOR INFLUENCING THE RHEOLOGICAL PROPERTIES OF A TRANSPORTABLE MATERIAL
SYSTEME POUR INFLUER SUR LES PROPRIETES RHEOLOGIQUES D'UN MATERIAU TRANSPORTABLE

(30) Priorität: 21.01.2002 DE 10202248
(43) Veröffentlichungstag der Anmeldung: 20.10.2004
(73) Patentinhaber: Bühler AG, 9240 Uzwil (CH)
(72) Erfinder: OURIEV, Boris, CH-9244 Niederuzwil (CH)
(74) Vertreter: Frommhold, Joachim
(86) Internationale Anmeldenummer: PCT/CH2003/000033
(87) Internationale Veröffentlichungsnummer: WO 2003/059794

(56) Entgegenhaltungen:
- GB-A- 2 085 388
- JP-A- 60 036 223
- US-A- 4 856 344
- US-A- 5 123 433
- US-A- 5 998 681

## Beschreibung

Die vorliegende Erfindung bezieht sich auf ein System zum Beeinflussen der rheologischen Eigenschaften eines förderbaren Materials, insbesondere eines fliessfähigen oder pastösen Produktes oder eines Schüttguts, wobei das System einer Maschine zum Bearbeiten bzw. Verarbeiten des förderbaren Materials zugeordnet oder zuordenbar ist, in der das förderbare Material entlang einer Förderrichtung transportiert wird.

Die US 5123433 beschreibt ein Ultraschall-Reinigungsgerät und ein Ultraschall-Reinigungsverfahren für eine Venturi-Strömungsdüse, die von einem zu Ablagerungen neigenden Fluid durchströmt wird. Sowohl ein US-Sender als auch ein US-Empfänger werden zusätzlich verwendet, wobei über Veränderungen der empfangenen US-Amplitude bei bekannter ausgesendeter US-Amplitude auf die Dicke eventueller Ablagerungen in der Düse Rückschlüsse getroffen werden können. Ausser der Erfassung des Verschmutzungszustandes der Düse aufgrund von Ablagerungen erfolgt aber keine Erfassung rheologischer Eigenschaften des strömenden Fluids.

Der Transport und die Bearbeitung/Verarbeitung viskoser oder pastöser Massen, aber auch der Transport von Schüttgütern erfordern viel Energie und zum Teil entsprechend gross ausgelegte Maschinen. Ausserdem ergeben sich beim Transport derartiger Massen oder Schüttgüter aufgrund der Wandreibung unterschiedliche Verweilzeiten des Materials in Maschinenbereichen oder in Transportleitungen, was die letztendlich erzielte Qualität des bearbeiteten/ verarbeiteten Materials beeinträchtigt.

Der Erfindung liegt daher die Aufgabe zugrunde, einerseits bei der Bearbeitung/Verarbeitung und vor allern beim Transport der viskosen oder pastösen Massen in der Maschine Energie und/oder Maschinengrösse einzusparen, und andererseits eine Überwachung und Beurteilung der rheologischen Eigenschaften der Massen in der Maschine zu ermöglichen.

Diese Aufgabe wird erfindungsgemäss dadurch gelöst, dass das eingangs genannte System: mindestens ein steuerbares Einwirkungssystem zum Erzeugen und Einleiten mechanischer Schwingungen in das Material in mindestens einem Bearbeitungsabschnitt der Maschine; sowie mindestens ein Erfassungssystem zum Erfassen der rheologischen Eigenschaften des Materials aufweist; wobei die erfassten rheologischen Eigenschaften als Grundlage für die Ansteuerung des Einwirkungssystems zum Erzeugen und Einleiten der mechanischen Schwingungen verwendet werden.

Indem die Auswirkungen der Einwirkung des mindestens einen steuerbaren Einwirkungssystems auf die rheologischen Eigenschaften des Materials mittels des mindestens einen Erfassungssystems erfasst werden, wird eine gezielte Beeinflussung der rheologischen Eigenschaften in mindestens einem Bearbeitungsbereich der Maschine ermöglicht.

Efindungsgemäss weist das Erfassungssystem ein erstes Mittel zur Bestimmung des Geschwindigkeitsfeldes quer zur Förderrichtung in einem Bereich des Materials und ein zweites Mittel zur Bestimmung der Druckdifferenz entlang der Förderrichtung in dem Bereich und/oder am Rand des Bereichs des Materials auf, oder das Erfassungssystem weist wiederum ein erstes Mittel zur Bestimmung des Geschwindigkeitsfeldes quer zur Förderrichtung in einem Bereich des Materials und ein zweites Mittel zur Bestimmung der Schubspannung entlang der Förderrichtung am Rand und/oder innerhalb des Bereichs des Materials auf.

Sowohl bei Verwendung der Druckdifferenz als auch bei Verwendung der Schubspannung kann aus der Kenntnis des Geschwindigkeitsfeldes des Materials und der an dem Material anliegenden Druckdifferenz dann die Scherviskositätsfunktion des Materials bestimmt werden. Diese nichtinvasive Vorgehensweise eignet sich besonders gut für industriellen Prozesse.

Das erfindungsgemässe System kann mehrere Einwirkungssysteme für mechanische Schwingungen aufweisen, wobei mindestens ein Einwirkungssystem für mechanische Schwingungen unabhängig vom Betriebszustand der Maschine ansteuerbar ist. Auch mehrere Einwirkungssysteme für mechanische Schwingungen können voneinander gesondert ansteuerbar sein. Dies ermöglicht eine gezielte und ggf. an verschiedenen Bearbeitungsabschnitten der Maschine unterschiedliche Beeinflussung des zu verarbeitenden, bearbeitenden oder zu transportierenden Materials.

Bei einer besonders vorteilhaften Ausführung des erfindungsgemässen Systems ist ein erstes Erfassungssystem zum Erfassen der rheologischen Eigenschaften des förderbaren Materials förderabseitig von dem Bearbeitungsabschnitt angeordnet zur Erzeugung erster Signale, welche die physikalisch-chemischen, insbesondere rheologischen Eigenschaften des Materials stromab von dem Bearbeitungsabschnitt kennzeichnen. Dadurch kann die Wirksamkeit der Beeinflussung des Materials in dem Bearbeitungsabschnitt ständig überwacht und somit die Intensität der Beeinflussung ggf. angepasst werden.

Zweckmässigerweise ist zusätzlich ein zweites Erfassungssystem zum Erfassen der rheologischen Eigenschaften des förderbaren Materials förderaufseitig von dem Bearbeitungsabschnitt angeordnet zur Erzeugung zweiter Signale, welche die physikalisch-chemischen, insbesondere rheologischen Eigenschaften des Materials stromauf von dem Bearbeitungsabschnitt kennzeichnen.

Das erste und das zweite Erfassungssystem ermöglichen es nun, die ersten Signale und/oder die zweiten Signale mit jeweiligen Referenzwerten zu vergleichen, die bestimmte rheologische Eigenschaften kennzeichnen, wobei in Abhängigkeit von dem Ergebnis des Vergleichs der Signale innerhalb eines Regelkreises eine Rückkopplung erfolgt zur Ansteuerung des mindestens einen Einwirkungssystems für mechanische Schwingungen.

Ergänzend oder alternativ können auch die ersten Signale und die zweiten Signale miteinander verglichen werden, wobei dann auch hier in Abhängigkeit von dem Ergebnis des Vergleichs der Signale innerhalb eines Regelkreises eine Rückkopplung erfolgt zur Ansteuerung des mindestens einen Einwirkungssystems für mechanische Schwingungen.

Weitere Vorteile, Merkmale und Anwendungsmöglichkeiten der Erfindung ergeben sich aus der nun folgenden Beschreibung nicht einschränkend aufzufassender Ausführungsbeispiele anhand der Zeichnung, wobei:
- Fig. 1: eine schematische Darstellung des erfindungsgemässen Systems als Blockdiagramm ist;
- Fig. 2: eine schematische Darstellung einer speziellen Ausführung des steuerbaren Einwirkungssystems im Längsschnitt entlang der Material-Förderrichtung ist; und
- Fig. 3: eine schematische Darstellung einer speziellen Ausführung des Erfassungssystems im Längsschnitt entlang der Material-Förderrichtung ist.

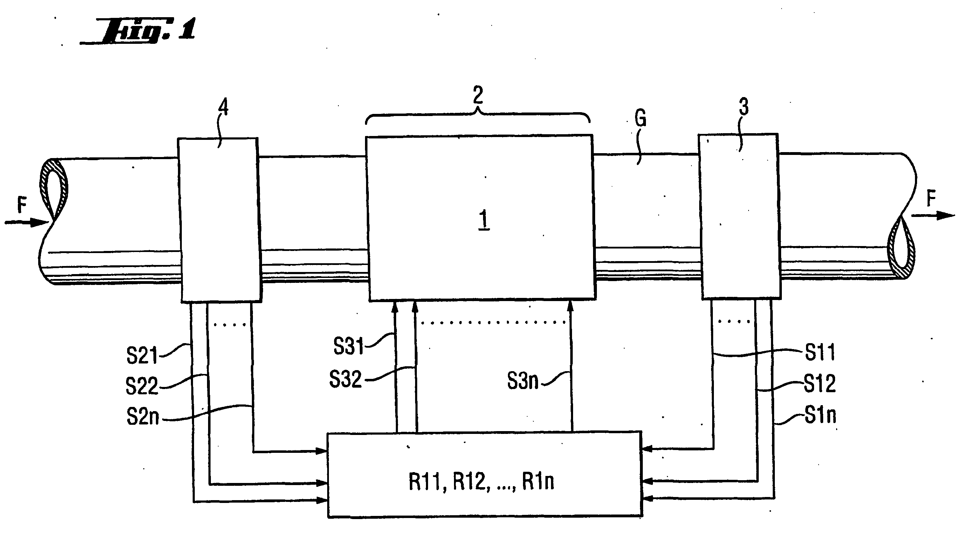

Fig. 1 ist eine schematische Darstellung des erfindungsgemässen Systems als Blockdiagramm. Ein Maschinenabschnitt mit einem Gehäuseabschnitt G wird in einer Förderrichtung F von einem förderbaren Material durchströmt, dessen rheologische Eigenschaften durch das erfindungsgemässe System beeinflusst werden. Hierzu ist dem Gehäuseabschnitt G des Maschinenabschnitts im Bereich eines Bearbeitungsabschnitts 2 der Maschine ein steuerbares Einwirkungssystem 1 zugeordnet. Stromab und stromauf von dem Bearbeitungsabschnitt (2) der Maschine sind dem Gehäuseabschnitt G ein erstes Erfassungssystem 3 bzw. ein zweites Erfassungssystem 4 zugeordnet. Das erste und das zweite Erfassungssystem 3, 4 dienen zum Erfassen der rheologischen Eigenschaften des förderbaren Materials förderabseitig bzw. förderaufseitig von dem Bearbeitungsabschnitt 2. Das erste Erfassungssystem 3 dient zur Erzeugung erster Signale S11, S12, .... S1n, welche die physikalisch-chemischen, insbesondere rheologischen Eigenschaften des Materials stromab von dem Bearbeitungsabschnitt 2 kennzeichnen. Das zweite Erfassungssystem 4 dient zum Erfassen der rheologischen Eigenschaften des förderbaren Materials förderaufseitig von dem Bearbeitungsabschnitt 2. Das zweite Erfassungssystem 4 dient zur Erzeugung zweiter Signale S21, S22, .....S2n, welche die physikalisch-chemischen, insbesondere rheologischen Eigenschaften des Materials stromauf von dem Bearbeitungsabschnitt 2 kennzeichnen.

Die von dem ersten Erfassungssystem 3 stammenden ersten Signale S11, S12, ..., S1n werden einem Regelkreis bzw. einer Steuerungsschaltung 5 zugeführt. Ebenso werden die von dem zweiten Erfassungssystem 4 stammenden zweiten Signale S21, S22,...., S2n dem Regelkreis bzw. der Steuerungsschaltung 5 zugeführt. In diesem Regelkreis bzw. dieser Steuerungsschaltung 5 werden die von dem ersten Erfassungssystem 3 und dem zweiten Erfassungssystem 4 stammenden ersten bzw. zweiten Signale verarbeitet. Im Rahmen der Verarbeitung dieser Signale findet z.B. ein Vergleich der ersten Signale S11, S12,...., S1n und/oder der zweiten Signale S21, S22,...., S2n mit jeweiligen Referenzwerten R11, R12,...., R1n statt. Zusätzlich hierzu oder alternativ können die ersten Signale und die zweiten Signale auch miteinander verglichen werden. In Abhängigkeit von dem Vergleich der ersten und der zweiten Signale mit den Referenzwerten bzw. der ersten Signale mit den zweiten Signalen erfolgt über den Regelkreis bzw. die Steuerungsschaltung 5 eine Ansteuerung (S31, S32,...., S3n) des Einwirkungssystems 1, in dem die zur Beeinflussung der rheologischen Eigenschaften des förderbaren Materials notwendigen mechanischen Schwingungen erzeugt werden.

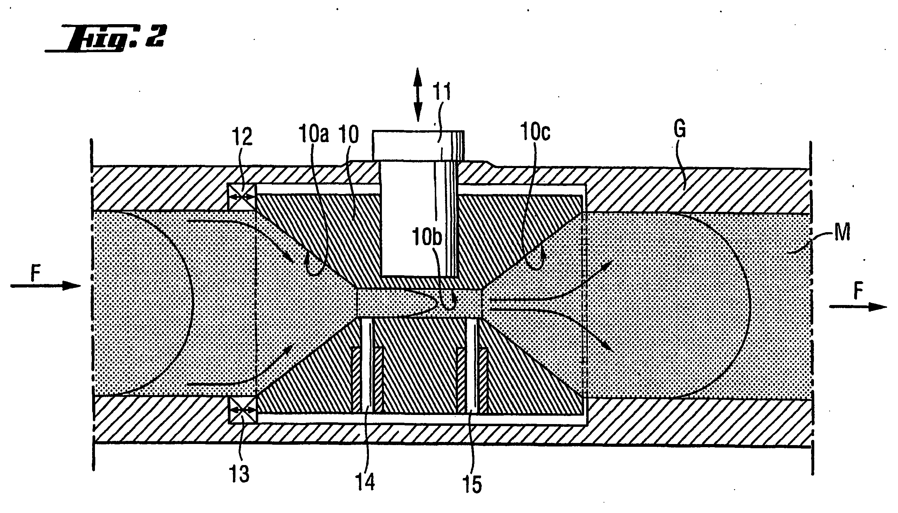

Fig. 2 ist eine schematische Darstellung einer speziellen Ausführung des steuerbaren Einwirkungssystems im Längsschnitt entlang der Materialförderrichtung F. In dem Gehäuseabschnitt G ist eine Schlitzdüse 10 angeordnet. Entlang der Strömungsrichtung F besteht der Durchlassbereich der Schlitzdüse 10 aus einem sich verjüngenden Einlaufbereich 10a, an den sich ein Schlitzbereich 10b anschliesst, der wiederum in einen sich aufweitenden Auslaufbereich 10c mündet. Die Schlitzdüse enthält ausserdem eine erste Ultraschallquelle 11 und ist mit einer zweiten und einer dritten Ultraschallquelle 12, 13 verbunden. Die erste Ultraschallquelle 11 dient dazu eine Ultraschallwelle mit hoher Intensität in den Schlitzbereich 10b einzuleiten, wobei die Schwingungsrichtung vorwiegend senkrecht zur Strömungsrichtung F ist. Mit der zweiten und der dritten Ultraschallquelle 12, 13 werden ebenfalls Ultraschallwellen in den Bereich der Schlitzdüse 10 eingeleitet, wobei die Schwingungsrichtung vorwiegend parallel zur Strömungsrichtung F ist. Am stromaufseitigen Ende und am stromabseitigen Ende des Schlitzbereichs 10b befindet sich ein erster Drucksensor 14 bzw. ein zweiter Drucksensor 15. Die so ermittelte Druckdifferenz zwischen dem ersten Drucksensor 14 und dem zweiten Drucksensor 15 kann in Verbindung mit Information über den Volumenstrom durch den Gehäuseabschnitt G für die Bestimmung der Scherviskosität des förderbaren Material M verwendet werden.

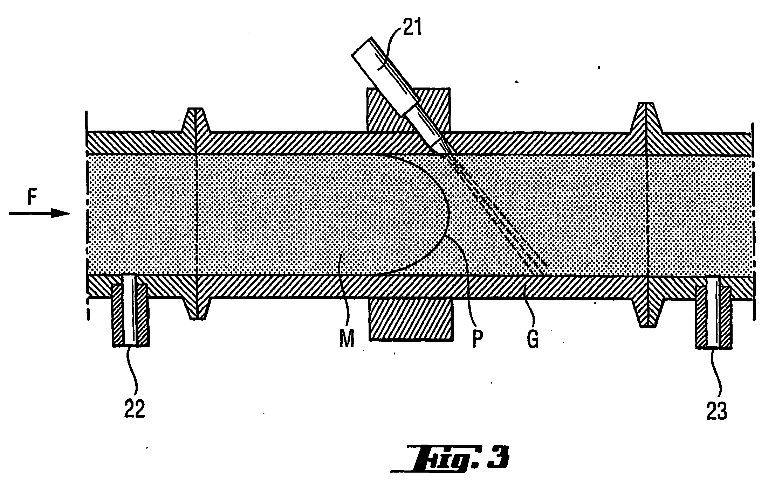

Fig. 3 ist eine schematische Darstellung einer speziellen Ausführung des Erfassungssystems im Längsschnitt entlang der Materialförderrichtung F. Ein Ultraschall-Sender/Empfänger 21 ermittelt aus dem Echo des Ultraschalls das Geschwindigkeitsprofil P bzw. die Geschwindigkeit des strömenden Materials M als Funktion von der radialen Koordinate. Ein erster Drucksensor 22 stromauf von dem Ultraschall-Sender/Empfänger und ein zweiter Drucksensor 23 stromab von dem Ultraschall-Sender/Empfänger ermöglichen die Bestimmung einer Druckdifferenz entlang der Gehäusewand G und somit die Bestimmung der Wandspannung. Unter der Annahme einer linearen Schubspannungsverteilung im Rohrquerschnitt lässt sich dadurch zusammen mit dem ebenfalls bestimmten Geschwindigkeitsprofil P die Scherviskosität als Funktion des örtlichen Geschwindigkeitsgradienten bestimmen.

### Bezugszeichenliste

- 1: Einwirkungssystem
- 2: . Bearbeitungsabschnitt
- 3: erstes Erfassungssystem
- 4: zweites Erfassungssystem
- 5: Regelkreis bzw. Steuerungsschaltung
- 10: Schlitzdüse
- 11: erste Ultraschallquelle
- 12: zweite Ultraschallquelle
- 13: dritte Ultraschallquelle
- 14: erster Drucksensor
- 15: zweiter Drucksensor
- 10a: Einlaufbereich
- 10b: Schlitzbereich
- 10c: Auslaufbereich
- F: Förderrichtung
- G: Gehäuseabschnitt
- P: Geschwindigkeitsprofil
- M: Material
- S11 bis S1n: erste Signale
- S21 bis S2n: zweite Signale
- R11 bis R1n: Referenzwerte
- 21: Ultraschall-Sender/Empfänger
- 22: erster Drucksensor
- 23: zweiter Drucksensor

## Patentansprüche

1. System (1, 3,4) zum Beeinflussen der rheologischen Eigenschaften eines förderbaren Materials, insbesondere eines fliessfähigen oder pastösen Produktes oder eines Schüttguts, wobei das System einer Maschine zum Bearbeiten bzw. Verarbeiten des förderbaren Materials (M) zugeordnet oder zuordenbar ist, in der das förderbare Material entlang einer Förderrichtung (F) transportiert wird, wobei das System ausweist:
a) mindestens ein steuerbares Einwirkungssystem (1; 11, 12, 13) zum Erzeugen und Einleiten mechanischer Schwingungen in das Material (M) in mindestens einem Bearbeitungsabschnitt (2) der Maschine; sowie
b) mindestens ein Erfassungssystem (3; 4; 14, 15; 21, 22, 23) zum Erfassen der rheologischen Eigenschaften des Materials (M); wobei
c) die erfassten rheologischen Eigenschaften als Grundlage für die Ansteuerung des Einwirkungssystems (1; 11, 12, 13) zum Erzeugen und Einleiten der mechanischen Schwingungen verwendet wenden,
**dadurch gekennzeichnet, dass** das Erfassungssystem ein erstes Mittel (21) zur Bestimmung des Geschwindigkeitsfeldes quer zur Förderrichtung (F) in einem Bereich des Materials und ein zweites Mittel (22, 23) zur Bestimmung der Druckdifferenz entlang der Förderrichtung (F) in dem Bereich und/oder am Rand des Bereichs des Materials aufweist, oder dass das Erfassungssystem ein erstes Mittel (21) zur Bestimmung des Geschwindigkeitsfeldes quer zur Förderrichtung (F) in einem Bereich des Materials und ein zweites Mittel zur Bestimmung der Schubspannung entlang der Förderrichtung (F) am Rand und/oder innerhalb des Bereichs des Materials aufweist.

2. System nach Anspruch 1, **dadurch gekennzeichnet, dass** es mehrere Einwirkungssysteme (1; 11, 12, 13) für mechanische Schwingungen aufweist.

3. System nach Anspruch 1 oder 2, **dadurch gekennzeichnet, dass** das mindestens eine Einwirkungssystem (1; 11, 12, 13) für mechanische Schwingungen unabhängig vom Betriebszustand der Maschine ansteuerbar ist.

4. System nach einem der Ansprüche 1 bis 3, **dadurch gekennzeichnet, dass** mehrere Einwirkungssysteme (1; 11, 12, 13) für mechanische Schwingungen voneinander gesondert ansteuerbar sind.

5. System nach einem der Ansprüche 1 bis 4, **dadurch gekennzeichnet, dass** ein erstes Erfassungssystem (3) zum Erfassen der rheologischen Eigenschaften des förderbaren Materials förderabseitig von dem Bearbeitungsabschnitt (2) angeordnet ist zur Erzeugung erster Signale (S11, S12, ..., S1n), welche die physikalisch-chemischen, insbesondere rheologischen Eigenschaften des Materials stromab von dem Bearbeitungsabschnitt (2) kennzeichnen.

6. System nach einem der Ansprüche 1 bis 5, **dadurch gekennzeichnet, dass** ein zweites Erfassungssystem (4) zum Erfassen der rheologischen Eigenschaften des förderbaren Materials förderaufseitig von dem Bearbeitungsabschnitt (2) angeordnet ist zur Erzeugung zweiter Signale (S21, S22, ..., S2n), welche die physikalisch-chemischen, insbesondere rheologischen Eigenschaften des Materials stromauf von dem Bearbeitungsabschnitt (2) kennzeichnen.

7. Maschine nach einem der Ansprüche 5 oder 6, **dadurch gekennzeichnet, dass** die ersten Signale (S11, S12, ..., S1n) und/oder die zweiten Signale (S21, S22, ..., S2n) mit jeweiligen Referenzwerten (R11, R12, ..., R1n) verglichen werden, die bestimmte rheologische Eigenschaften kennzeichnen, wobei in Abhängigkeit von dem Ergebnis des Vergleichs der Signale innerhalb eines Regelkreises (5) eine Rückkopplung erfolgt zur Ansteuerung des mindestens einen Einwirkungssystems (1; 11, 12, 13) für mechanische Schwingungen.

8. Maschine nach einem der Ansprüche 5, 6 oder 7, **dadurch gekennzeichnet, dass** die ersten Signale (S11, S12, ..., S1n) und die zweiten Signale (S21, S22, ..., S2n) miteinander verglichen werden, wobei in Abhängigkeit von dem Ergebnis des Vergleichs der Signale innerhalb eines Regelkreises (5) eine Rückkopplung erfolgt zur Ansteuerung des mindestens einen Einwirkungssystems (1; 11, 12, 13) für mechanische Schwingungen.

## Claims

1. A system (1, 3, 4) for influencing the rheological properties of a displaceable material, particularly a flowable or paste-like product or bulk material, wherein the system is assigned or assignable to a machine for handling or processing the displaceable material, in which the displaceable material (M) is transported in a conveying direction (F), wherein the system includes:
a) at least one controllable influence-inducing system (1; 11, 12, 13) for generating and introducing mechanical oscillations in the material (M) in at least one handling section (2) of the machine; and
b) at least one recording system (3; 4; 14, 15; 21, 22, 23) for recording the rheological properties of the material (M); wherein
c) the recorded rheological properties are used as the basis for actuating the influence-inducing system (1; 11, 12, 13) for generating and introducing mechanical oscillations,
**characterised in that**
the recording system includes a first means (21) for determining the velocity field transversely to the conveying direction (F) in one area of the material and a second means (22, 23) for determining the pressure differential along the conveying direction (F) in the area and/or at the edge of the area in the material, or that the recording system includes a first means (21) for determining the velocity field transversely to the conveying direction (F) in one area of the material and a second means for determining the shear stress along the conveying direction (F) at the edge and/or within the area of material.

2. The system as cited in claim 1, **characterised in that** it includes multiple influence-inducing systems (1; 11, 12 13) for mechnical oscillations.

3. The system as cited in either of claims 1 or 2, **characterised in that** the at least one influence-inducing system (1; 11, 12 13) for mechanical oscillations is actuatable regardless of the operating status of the machine.

4. The system as cited in any of claims 1 to 3, **characterised in that** multiple influence-inducing systems (1; 11, 12 13) for mechanical oscillations are actuatable independently of each other.

5. The system as cited in any of claims 1 to 4, **characterised in that** a first recording system (3) for recording the rheological properties of the displaceable material is arranged downstream of the handling section (2) for generating first signals (S11, S12, ..., S1n), which identify the physico-chemical, particularly the rheological properties of the material downstream of the handling section (2).

6. The system as cited in any of claims 1 to 5, **characterised in that** a second recording system (3) for recording the rheological properties of the displaceable material is arranged upstream of the handling section (2) for generating second signals (S21, S22, ..., S2n), which identify the physico-chemical, particularly the rheological properties of the material upstream of the handling section (2).

7. A machine as cited in either of claims 5 or 6, **characterised in that** the first signals (S11, S12, ..., S1n) and/or the second signals (S21, S22, ..., S2n) are compared with respective reference values (R11, R12, ..., R1n) that identify certain rheological properties, wherein depending on the result of the comparison of the signals, feedback is provided in a control circuit (5) for actuating the at least one influence-inducing system (1; 11, 12, 13) for mechanical oscillations.

8. The machine as cited in any of claims 5, 6 or 7, **characterised in that** the first signals (S11, S12, ..., S1n) and the second signals (S21, S22, ..., S2n) are compared with each other, wherein depending on the result of the comparison of the signals, feedback is provided in a control circuit (5) for actuating the at least one influence-inducing system (1; 11, 12, 13) for mechanical oscillations.

## Revendications

1. Système (1, 3, 4) permettant d'influer sur les propriétés rhéologiques d'une matière transportable, notamment d'un produit visqueux ou pâteux ou d'une marchandise en vrac, dans lequel le système est associé ou peut être associé à une machine d'usinage ou de traitement de matière transportable (M) où la matière transportable est transportée dans un sens de transport (F), le système présentant :
a) au moins un système d'action contrôlable (1 ; 11, 12, 13) pour la génération et l'introduction d'oscillations mécaniques dans la matière (M) dans au moins une section d'usinage (2) de la machine ainsi
b) qu'au moins un système d'enregistrement (3 ; 4 ; 14, 15 ; 21, 22, 23) pour l'enregistrement des propriétés rhéologiques de la matière (M), sachant que
c) les propriétés rhéologiques enregistrées sont utilisées comme base pour la commande du système d'action (1 ; 11, 12, 13) pour la génération et l'introduction des oscillations mécaniques,
**caractérisé en ce que** le système d'enregistrement présente un premier moyen (21) de détermination du champ de vitesse transversalement au sens de transport (F) dans une zone de la matière et un deuxième moyen (22, 23) de détermination de la différence de pression dans le sens de transport (F) dans la zone et/ou en périphérie de la zone de la matière ou que le système d'enregistrement présente un premier moyen (21) de détermination du champ de vitesse transversalement au sens de transport (F) dans une zone de la matière et un deuxième moyen de détermination de la tension de poussée dans le sens de transport (F) en périphérie et/ou à l'intérieur de la zone de la matière.

2. Système selon la revendication 1, **caractérisé en ce qu'**il présente plusieurs systèmes d'action (1 ; 11, 12, 13) pour les oscillations mécaniques.

3. Système selon la revendication 1 ou 2, **caractérisé en ce qu'**au moins un système d'action (1 ; 11, 12, 13) pour les oscillations mécaniques est contrôlable indépendamment de l'état de fonctionnement de la machine.

4. Système selon une des revendications 1 à 3, **caractérisé en ce que** plusieurs systèmes d'action (1 ; 11, 12, 13) pour les oscillations mécaniques sont contrôlables isolément les uns des autres.

5. Système selon une des revendications 1 à 4, **caractérisé en ce qu'**un premier système d'enregistrement (3) pour l'enregistrement des propriétés rhéologiques de la matière transportable est disposé du côté aval de transport de la section d'usinage (2) pour générer de premiers signaux (S11, S12,..., S1 n) qui caractérisent les propriétés physico-chimiques, notamment rhéologiques, de la matière en aval de la section d'usinage (2).

6. Système selon une des revendications 1 à 5, **caractérisé en ce qu'**il est prévu un deuxième système d'enregistrement (4) pour l'enregistrement des propriétés rhéologiques de la matière transportable du côté amont de transport de la section d'usinage (2) pour générer de seconds signaux (S21, S22, ..., S2n) qui caractérisent les propriétés physico-chimiques, notamment rhéologiques, de la matière en amont de la section d'usinage (2).

7. Système selon une des revendications 5 ou 6, **caractérisé en ce que** les premiers signaux (S11, S12, ..., S1n) et/ou les deuxièmes signaux (S21, S22, S2n) sont comparés à des valeurs de.référence respectives (R11, R12, ..., R1,) qui caractérisent certaines propriétés rhéologiques, sachant qu'en fonction du résultat de la comparaison des signaux, il y a un rétro-couplage à l'intérieur d'une boucle de contrôle (5) pour commander l'au moins un système d'action (1 ; 11, 12, 13) pour les oscillations mécaniques.

8. Système selon une des revendications 5, 6 ou 7, **caractérisé en ce que** les premiers signaux (S11, S12, ..., S1n) et les deuxièmes signaux (S21, S22, S2n) sont comparés les uns aux autres, sachant qu'en fonction du résultat de la comparaison des signaux, il y a un rétro-couplage à l'intérieur d'une boucle de contrôle (5) pour commander l'au moins un système d'action (1 ; 11, 12, 13) pour les oscillations mécaniques.
